# EUROPÄISCHE PATENTSCHRIFT

(11) **EP 0 708 001 B1**
(45) Veröffentlichungstag und Bekanntmachung des Hinweises auf die Patenterteilung: **15.07.1998**
(21) Anmeldenummer: 95113887.4
(22) Anmeldetag: 05.09.1995
(51) Int. Cl.: B60R 13/04, F16B 2/14, F16B 5/12

(54) **Befestigungsvorrichtung für eine Zier- bzw. Abdeckleiste**
Trim or cover moulding fastening device
Dispositif pour le fixation d'un enjoliveur ou d'une moulure de couverture

(30) Priorität: 21.10.1994 DE 4437687; 16.06.1995 DE 19521862
(43) Veröffentlichungstag der Anmeldung: 24.04.1996
(73) Patentinhaber: Dr.Ing.h.c. F. Porsche Aktiengesellschaft, 70435 Stuttgart (DE)
(72) Erfinder: Pfister, Klaus, D-75433 Maulbronn (DE)

(56) Entgegenhaltungen:
- DE-A- 3 110 989
- DE-C- 3 230 317
- FR-A- 2 391 387
- FR-A- 2 637 951

## Beschreibung

Die Erfindung betrifft eine Befestigungsvorrichtung für eine Zier- bzw. Abdeckleiste von Spalten an Kraftfahrzeugaufbauten, gemäß dem Oberbegriff des Patentanspruchs 1.

Eine Befestigungsvorrichtung der eingangs genannten Art geht aus der DE-PS 31 10 989 hervor. Diese beschreibt einen verklemmbaren Haltekörper, der in einen Spalt zwischen dem Hauptdachblech und dem Dachseitenholm eingesetzt ist. Dieser Haltekörper besteht aus zwei keilförmigen Teilen, die entlang einer gemeinsamen, schräg verlaufenden Trennfläche gegeneinander verschiebbar sind und sich dabei an den Seitenwänden des Spalts verkeilen. In einem dieser beiden Teile ist eine Halterung für eine Zier- bzw. Abdeckleiste vorgesehen.

Nachteilig an dieser bekannten Befestigungsvorrichtung ist, daß bei toleranzbedingten Schwankungen der Spaltbreite die Halterung der Zier- bzw. Abdeckleiste nur zu einer Spaltseite hin einen konstanten Abstand aufweist, nämlich der Spaltseite, an der das die Halterung aufnehmende Teil anliegt. Somit ist eine zentrische Ausrichtung der Zier-bzw. Abdeckleiste entlang der Längserstreckung des Spaltes nicht möglich.

Aufgabe der Erfindung ist es, eine Befestigungsvorrichtung derart auszubilden, daß unabhängig von toleranzbedingten Schwankungen der Spaltbreite die Zier- bzw. Abdeckleiste immer absolut zentrisch befestigbar ist.

Ferner sollte die Befestigungsvorrichtung kostengünstig in der Herstellung, schnell und einfach in der Montage und sicher in der Halterung sein.

Erfindungsgemäß wird diese Aufgabe durch die kennzeichnenden Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß ein kostengünstig herstellbarer Haltekörper schnell und sicher in einen Spalt einer Fahrzeugkarosserie einsetzbar ist und dieser eine absolut zentrische Befestigung einer Zier- bzw. Abdeckleiste sicherstellt.

Ein typischer Spalt an Fahrzeugkarosserien ist der Dachspalt. Zwischen dem Hauptdachblech und einem Dachseitenholm ist ein etwa rechteckiger, sich über die gesamte Dachlänge erstreckender Spalt ausgebildet. In diesen werden in bestimmten Abständen sogenannte Haltekörper eingesetzt, die eine Längsnut für eine, den Spalt ab- oder überdeckende Leiste aufweisen. Diese Haltekörper können durch seitliches Verspannen im Dachspalt befestigt sein.

Durch Toleranzen bedingt ist die Spaltbreite über ihre gesamte Länge nicht exakt gleich. Ist die Längsnut für die Zier- bzw. Abdeckleiste an einem an der Spaltwand anliegenden Teil des Haltekörpers befestigt, so weicht die Längsnut entsprechend der Spaltbreitenschwankung von der anderen Spaltwand ab. Um sicherzustellen, daß sich die Längsnut der Zier- bzw. Abdeckleiste im Haltekörper unabhängig von der Spaltbreite immer exakt in der Spaltmitte befindet, ist der Haltekörper mehrteilig aufgebaut, nämlich aus einem mittig liegenden Teil mit einer Aufnahme für die Zier-bzw. Abdeckleiste und weiteren Teilen, die symmetrisch neben dem mittigen Teil angeordnet sind und den Haltekörper mit der Spaltwand verspannen. Das Verspannen kann durch ein Zusammenschieben keilförmiger Teilstücke erfolgen. Der Keilwinkel ist so wählbar, daß eine Selbsthemmung der Teile eintritt und sich diese somit nicht mehr lösen. Es ist aber auch eine Verzahnung auf den Trennflächen der Bauteile des Haltekörpers möglich.

Als vorteilhaft hat sich eine dreiteilige Ausführung des Haltekörpers erwiesen, bei der ein Spreizelement in Längsrichtung schiebbar zwischen zwei symmetrischen, seitlichen Spannteilen angeordnet ist. Dadurch wird sichergestellt, daß die am Spreizelement befestigte Zier- bzw Abdeckleiste immer mittig im Dachkanal zu liegen kommt.

In einer weiteren Ausführung können die Spannteile an ihrer breiteren Stirnseite jeweils einen quer zur Längserstreckung des Spaltes verlaufenden Anschlag aufweisen, der mit einer stufenförmigen Einprägung des gegenüberliegenden Spannteils in Wirkverbindung steht. Dadurch ist die gegenseitige Lage der Spannteile eindeutig festgelegt.

Die seitlichen Spannteile können mit dem mittigen Spreizelement über sich in Längsrichtung erstreckende Schiebeführungen verbunden sein, so daß die einzelnen Teile zwar gegeneinander verschiebbar, jedoch nicht trennbar sind. Dadurch kann der dreiteilige Haltekörper zu einer Baueinheit vormontiert werden. Diese Baueinheit wird dann in den Dachspalt eingesetzt und durch Zusammendrücken in Längsrichtung im Dachspalt verspannt.

Weiter stellt ein sich in Richtung Spaltboden erstreckender Sockel am mittig liegenden Spreizelement sicher, daß zwischen Halteteil und Spaltboden Kanäle für einen Regenwasserablauf im Dachspalt freibleiben. Ferner gewährleistet dieser Sockel, daß alle in einem Dachspalt eingesetzten Haltekörper gleichen Abstand vom Spaltboden aufweisen.

Eine sich zum Boden des Dachspalts erstreckende Hinterschneidung der Spaltseitenwände erhöht die Verankerungssicherheit des Haltekörpers im Dachspalt.

Die Aufnahme der Zier- bzw. Abdeckleiste am Spreizelement kann mittig oder außermittig angebracht sein, je nach Ausbildung der Zier- bzw. Abdeckleiste. Die Befestigung kann direkt oder unter Zwischenschaltung eines zusätzlichen Aufnahmeelements, wie z.B. einer metallischen Halteklammer erfolgen. Die Aufnahme wird beispielsweise durch eine vertiefte Längsnut oder angeformte, nach oben ragende Schnapphaken gebildet.

Ferner kann die Zier- bzw. Abdeckleiste unter Zwischenschaltung eines Adapters am Spreizelement in Lage gehalten sein. Der Adapter ist in die Zier- bzw. Abdeckleiste eingesetzt und bildet mit dieser eine vorgefertigte Einheit, die auf die Haltekörper aufgeklipst wird.

Ein Ausführungsbeispiel der Erfindung ist in der Zeichnung dargestellt und wird im folgenden näher beschrieben.

Es zeigt
- Fig.1: eine perspektivische Seitenansicht eines Kraftfahrzeuges mit einem Dachspalt,
- Fig.2: einen Schnitt durch den Dachspalt, gemäß der Linie II-II der Fig. 1,
- Fig.3: Einzelteile des Haltekörpers,
- Fig.4: einen vormontierten, einsatzfertigen Haltekörper,
- Fig.5: eine perspektivische Ansicht auf die Einzelteile einer zweiten Ausführungsform eines Haltekörpers,
- Fig.6: einen Schnitt durch einen Haltekörper gemäß Fig.5 im Bereich der angeformten Schnapphaken,
- Fig.7: eine perspektivische Ansicht auf die Einzelteile einer dritten Ausführungsform eines Haltekörpers und
- Fig.8: einen Schnitt durch den Haltekörper gemäß Fig. 7 im Bereich der Clipsverbindung zwischen Adapter und Zier- bzw. Abdeckleiste.

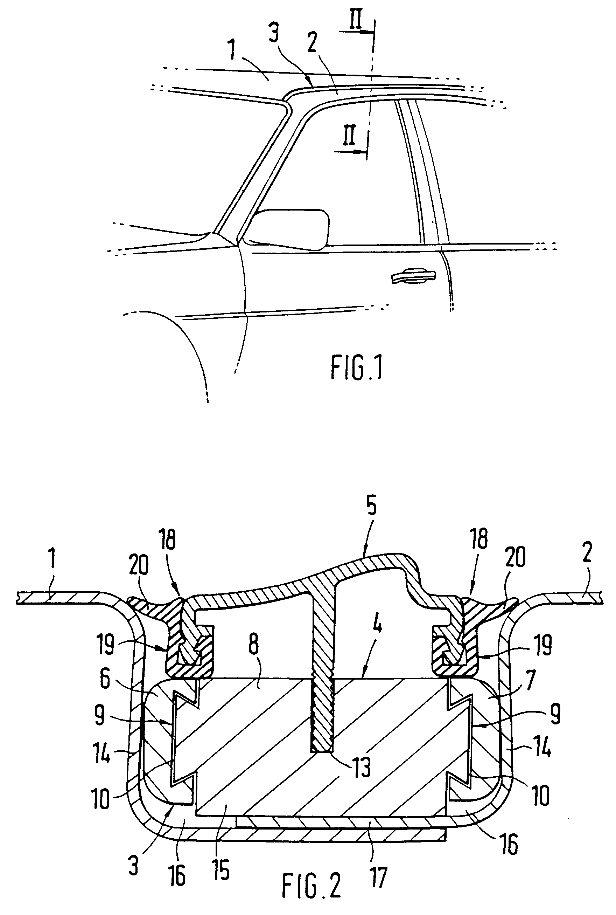

In Figur 1 ist perspektivisch ein Teil eines Kraftfahrzeuges zu sehen, bei dem zwischen dem Hauptdachblech 1 und dem Dachseitenholm 2 ein, sich über die volle Dachlänge erstreckender Spalt 3 vorgesehen ist. Ein Schnitt nach der Linie II-II zeigt in Figur 2 den Dachspalt 3 im Querschnitt und einen darin eingesetzten Haltekörper 4, an dem die Zier- bzw. Abdeckleiste 5 befestigt ist.

Wie aus Figur 2 weiter zu sehen ist, sind die Seitenwände 14 des Dachspalts 3 nach unten hinterschnitten, um eine bessere Klemmwirkung und somit erhöhte Befestigung des Haltekörpers 4 sicherzustellen. Das Spreizelement 8 weist bodenseitig einen Sockel 15 auf, der unterhalb des Haltekörpers 4 zwei freie Kanäle 16 bildet, in denen Regenwasser abfließen kann. Ferner gewährleistet dieser Sockel 15, daß alle in den Dachspalt 3 eingesetzten Haltekörper 4 gleichen Abstand a vom Dachspaltboden 17 aufweisen.

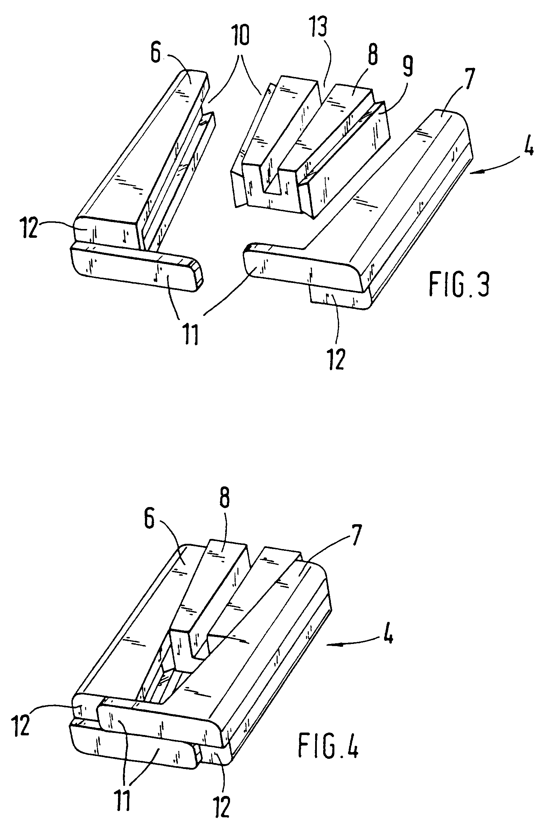

Einzelheiten des Haltekörpers 4 sind der Figur 3 zu entnehmen. Der Haltekörper 4 ist dreiteilig aufgebaut. Er besteht aus zwei symmetrischen, keilförmigen, links und rechts angeordneten Spannteilen 6, 7, die in Fertigungslage identische Form aufweisen und einem mittig angeordneten, zwischen den Spannteilen 6, 7 in Längsrichtung verschiebbaren, keilförmigen Spreizelement 8. Je je nach Stellung des Spreizelements 8 zwischen den Spannteilen 6, 7 werden diese mehr oder weniger auseinandergedrückt.
Die seitlichen Spannteile 6, 7 sind mit dem mittigen Spreizelement 8 über längsgerichtete Schiebeführungen 9 verbunden, z.B. mit einer sogenannten Schwalbenschwanzführung 10.

Im Bereich der Schiebeführungen 9 kann eine Verzahnung (nicht gezeigt) zwischen dem Spreizelement 8 und dem jeweils angrenzenden Spannteil 6, 7 vorgesehen sein. Bei entsprechend kleinem Winkel zwischen Spannteil 6, 7 und Spreizelement 8 ist jedoch auch eine aufgerauhte bzw. erodiert Fläche zwischen beiden Teilen für eine Selbsthemmung im verspannten Zustand ausreichend.

Die Spannteile 6, 7 weisen an ihrer breiteren Stirnseite jeweils einen quer zur Längserstreckung des Spaltes 3 verlaufenden Anschlag 11 auf, der mit einer stufenförmigen Einprägung 12 des gegenüberliegenden Spannteils in Wirkverbindung steht. Dadurch ist die wechselseitige Lage der Spannteile 6, 7 eindeutig fest gelegt, so daß das Spreizelement 8 immer zentral zwischen beiden Teilen 6, 7 zu liegen kommt. Beim Verschieben des Spreizelements 8 in Längsrichtung werden beide Spannteile 6, 7 gleichmäßig nach außen bewegt, so daß eine selbsttätige Zentrierung des Spreizelements 8 innerhalb des Spalts 3 erfolgt.

Im Spreizelement 8 ist eine Längsnut 13 angebracht. Diese kann mittig bzw. außermittig angeordnet sein. Die Halterung der Zier- bzw. Abdeckleiste 5 erfolgt direkt in der Längsnut 13; in die Längsnut 13 kann auch zusätzlich ein Aufnahmeelement (nicht dargestellt) eingeschoben werden, das die Zier- bzw. Abdeckleiste 5 hält.

Figur 4 zeigt einen vormontierten Haltekörper 4, bei dem die Spannteile 6, 7 mit dem Spreizelement 8, in Schiebeverbindung durch eine Schwalbenschwanzführung 10 eine Baueinheit bilden. Hierbei ist deutlich die Funktion der Anschläge 11 zu sehen, die durch gegenseitige Anlage an den stufenförmigen Einprägungen 12 der Spannteile 6, 7 diese in gleicher Position halten.

Beim Einbau des Haltekörpers 4 in den Dachspalt 3 wird die vormontierte Baueinheit gemäß der Figur 4 in den Dachspalt 3 eingesetzt und mittels eines Werkzeuges stirnseitig zusammengedrückt, so daß sich das Spreizelement 8 zwischen die Spannteile 6, 7 schiebt, und sich die Spannteile 6, 7 gegen die Seitenwände 14 des Dachspalts 3 verspannen und dadurch den Haltekörper 4 im Dachspalt 3 fixieren. Anschießend erfolgt die Befestigung der Zier- und Abdeckeleiste 5 in der Längsnut 13.

Gemäß Figur 2 ist die Zier- bzw. Abdeckleiste 5 an ihren beiden seitlichen Rändern mit aufgesteckten Dichtkedern 18 versehen, die jeweils einen Aufnahmeabschnitt 19 und eine Dichtlippe 20 aufweisen.

Bei Bedarf kann an der Oberseite der Spannteile 6, 7 eine nicht näher dargestellte Verzahnung oder Riffelung vorgesehen sein, die mit der Unterseite des angrenzenden Aufnahmeabschnittes 19 des Dichtkeders in Wirkverbindung steht.

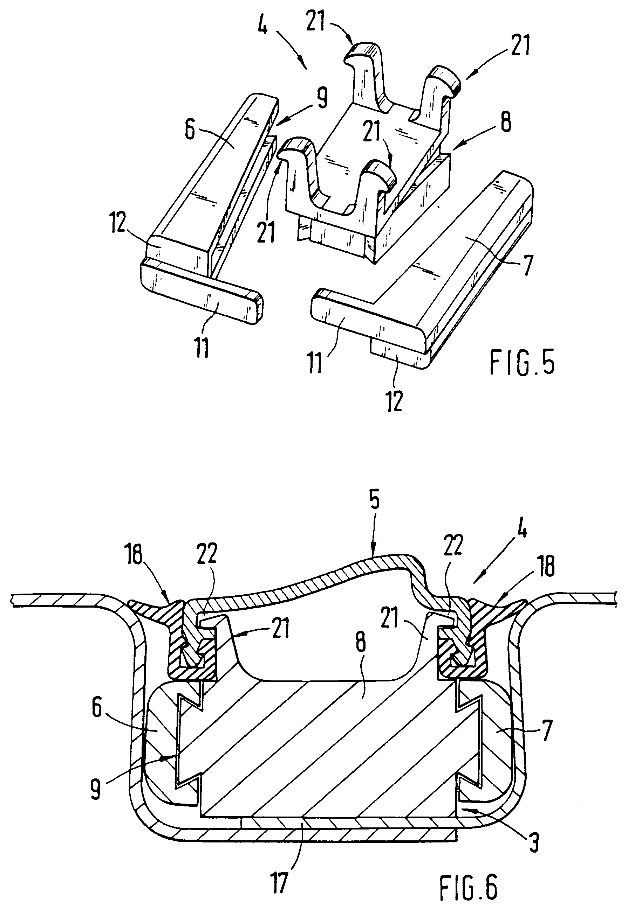

Die Figuren 5 und 6 zeigen eine zweite Ausführungsform eines Haltekörpers 4, der sich ebenfalls aus seitlichen Spannteilen 6, 7 und einem mittigen Spreizelement 8 zu sammensetzt. Diese Ausführungsform unterscheidet sich lediglich in der Ausbildung der Halterung der Zier- bzw. Abdeckleiste 5.

Gemäß den Figuren 5 und 6 sind am Spreizelement 8 anstelle der Längsnut 13 örtlich nach oben ragende Schnapphaken 21 angeformt, die mit hinterschnittenen Randbereichen 22 der Zier- bzw. Abdeckleiste 5 verrastend zusammenwirken. Die Schnapphaken 21 sind in Querrichtung federnd ausgebildet.

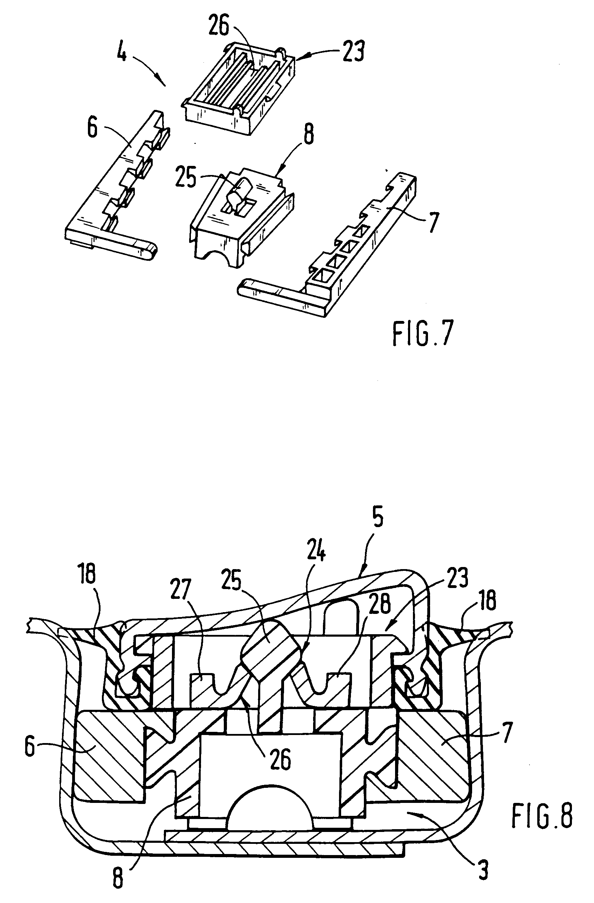

Entsprechend Figur 5 sind vier Schnapphaken 21 zur Fixierung der Zier-bzw. Abdeckleiste 5 vorgesehen. Es können jedoch auch mehr oder weniger Schnapphaken 21 am Spreizelement 8 angeordnet sein.
Eine dritte Ausführungsform eines Haltekörpers 4 ist in den Fig. 7 und 8 dargestellt.

Dieser Haltekörper 4 setzt sich ebenfalls aus seitlichen Spannteilen 6,7 und einem mittigen Spreizelement 8 zusammen. Die Halterung der Zier- bzw. Abdeckleiste 5 erfolgt hier nicht direkt am Spreizelement 8 sondern unter Zwischenschaltung eines Adapters 23 (Zwischenstück). Der Adapter 23 ist in die Zier- bzw. Abdeckleiste 5 eingesetzt. Dies erfolgt durch klipsen oder seitliches Einschieben .
Gemäß Fig. 8 wirkt der Adapter 23 formschlüssig mit der ihn umgebenden Zier-bzw. Abdeckleiste 5 zusammen. Bei der Montage des Haltekörpers 4 bildet die Zier-bzw. Abdeckleiste 5 zusammen mit den eingesetzten Adaptern 23 eine vorgefertigte Baueinheit.

Jeder Adapter 23 wirkt mit einem korrespondierenden Spreizelement 8 über eine Klipsverbindung 24 zusammen.
Die Klipsverbindung 24 setzt sich aus einem angeformten, vorstehenden Pilz 25 und einer dazugehörigen Aufnahme 26 zusammen.

Im Ausführungsbeispiel ist der Pilz 25 ab der Oberseite des Spreizelements 8 ausgebildet, wogegen die Aufnahme 26 am Adapter 23 vorgesehen ist. Die Aufnahme 26 wird durch zwei profilierte Stege 27,28 gebildet, die mit Abstand zueinander am etwa rechteckförmigen Adapter 23 ausgebildet sind, wobei die längsverlaufenden Stege 27,28 beabstandet zu den längeren äußeren Wandabschnitten des Adapters 23 verlaufen und an die kürzeren, querverlaufenden Wandabschnitte angeschlossen sind.

Gemäß Fig. 7 weist die Aufnahme 26 eine wesentlich größere Längserstreckung auf als die Länge B des Pilzes 25 (Toleranzausgleich). Der Pilz 25 kann jedoch auch an der Unterseite des Adapters 23 angeformt sein und die Aufnahme 26 kann am Spreizelement 8 ausgebildet sein.

Der Adapter 8 liegt bei eingebauter Zier- bzw. Abdeckleiste abschnittsweise an der Oberseite des darunterliegenden Spreizelements 8 auf.

Die erfindungsgemäße Ausbildung des Halterkörpers 4 ist nicht auf einen Dachspalt beschränkt, sondern kann an beliebigen Spalten am Fahrzeug eingesetzt werden.

### Bezugszeichen:

- 1: Hauptdachblech
- 2: Dachseitenholm
- 3: Spalt / Dachspalt
- 4: Haltekörper
- 5: Zier- bzw. Abdeckleiste
- 6: Spannteil
- 7: Spannteil
- 8: Spreizelement
- 9: Schiebeführung
- 10: Schwalbenschwanzführung
- 11: Anschlag
- 12: stufenförmige Einprägung
- 13: Längsnut
- 14: Seitenwände des Dachspalts
- 15: Sockel
- 16: freie Kanäle
- 17: Dachspaltboden
- 18: Dichtkeder
- 19: Aufnahmeabschnitt
- 20: Dichtlippe
- 21: Schnapphaken
- 22: Randbereiche
- a: Abstand Haltekörper<> Dachspaltboden
- 23: Adapter
- 24: Klipsverbindung
- 25: Pilz
- 26: Aufnahme
- 27: Stege
- 28: Stege

## Patentansprüche

1. Befestigungsvorrichtung für eine Zier- bzw. Abdeckleiste (5) von Spalten (3) an Kraftfahrzeugaufbauten mit einem in den Spalt (3) einsetzbaren, die Zier-bzw. Abdeckleiste (5) haltenden, verklemmbaren Haltekörper (4), **dadurch gekennzeichnet,** daß der mehrteilig ausgebildete Haltekörper (4) seitliche Spannteile (6, 7) umfaßt, die mittels eines zwischen den Spannteilen (6, 7) vorgesehenen, in Längsrichtung des Spalts (3) verschiebbaren Spreizelementes (8) gegen Seitenwände (14) des Spalts (3) verspannbar sind und daß am Spreizelement (8) die Zier- bzw. Abdeckleiste (5) festsetzbar ist.

2. Befestigungsvorrichtung nach Anspruch 1, **dadurch gekennzeichnet,** daß der Haltekörper (4) dreiteilig aufgebaut ist, wobei das Spreizelement (8) schiebbar zwischen zwei symmetrischen, seitlichen Spannteilen (6, 7) angeordnet ist.

3. Befestigungsvorrichtung nach den Ansprüchen 1 und 2, **dadurch gekennzeichnet,** daß die Spannteile (6, 7) keilförmig gestaltet sind und das ebenfalls keilförmig ausgebildete Spreizelement (8) zu den Innenwänden der Spannteile (6, 7) parallel verlaufende Außenwände aufweist.

4. Befestigungsvorrichtung nach einem oder mehreren der vorhergehenden Ansprüche, **dadurch gekennzeichnet,** daß die Spannteile (6, 7) in Fertigungslage identische Form aufweisen.

5. Befestigungsvorrichtung nach einem oder mehreren der vorhergehenden Ansprüche, **dadurch gekennzeichnet,** daß die Spannteile (6, 7) an ihrer breiteren Stirnseite jeweils einen quer zur Längserstreckung des Spaltes (3) verlaufenden Anschlag (11) aufweisen, der mit einer stufenförmigen Einprägung (12) des gegenüberliegenden Spannteils (6, 7) in Wirkverbindung steht.

6. Befestigungsvorrichtung nach einem oder mehreren der vorhergehenden Ansprüche, **dadurch gekennzeichnet,** daß die seitlichen Spannteile (6, 7) mit dem mittigen Spreizelement (8) über längsgerichtete Schiebeführungen (9, 10) zusammenwirken.

7. Befestigungsvorrichtung nach Anspruch 6, **dadurch gekennzeichnet,** daß die seitlichen Spannteile (6, 7) über Schwalbenschwanzführungen (10) mit dem mittigen Spreizelement (8) zusammenwirken.

8. Befestigungsvorrichtung nach den Ansprüchen 6 und 7, **dadurch gekennzeichnet,** daß im Bereich der Schiebeführungen (9, 10) eine Verzahnung zwischen dem Spreizelement (8) und dem angrenzenden Spannteil (6, 7) vorgesehen ist.

9. Befestigungsvorrichtung nach den Ansprüchen 6 und 7, **dadurch gekennzeichnet,** daß im Bereich der Schiebeführungen (9, 10) die zusammenwirkenden Außenflächen von Spannteil (6, 7) und Spreizelement (8) aufgerauht bzw. erodiert sind.

10. Befestigungsvorrichtung nach Anspruch 1, **dadurch gekennzeichnet,** daß am Spreizelement (8) eine Längsnut (13) ausgebildet ist, in die ein profilierter Fußabschnitt der Zier- bzw. Abdeckleiste (5) einsetzbar ist.

11. Befestigungsvorrichtung nach Anspruch 10, **dadurch gekennzeichnet,** daß in die Längsnut (13) ein zusätzliches Aufnahmeelement einsetzbar ist, das die Zier-bzw. Abdeckleiste (5) hält.

12. Befestigungsvorrichtung nach Anspruch 1, **dadurch gekennzeichnet,** daß am Spreizelement (8) ein Sockel (17) ausgebildet ist, der am Dachkanalboden (17) aufliegt und unterhalb des Haltekörper (4) Regenwasserablaufkanäle (16) bildet.

13. Befestigungsvorrichtung nach einem oder mehreren der vorhergehenden Ansprüche, **dadurch gekennzeichnet,** daß die beiden Spannteile (6, 7), das Spreizelement (8) und gegebenenfalls ein zusätzliches Aufnahmeelement für die Zier-bzw. Abdeckleiste (5) vor den Einbau in den Spalt (3) zu einer vormontierten Baueinheit zusammengesetzt sind.

14. Befestigungsvorrichtung nach einem oder mehreren der vorhergehenden Ansprüche, **dadurch gekennzeichnet,** daß am Spreizelement (8) örtlich nach oben ragende, federnde Schnapphaken (21) angeformt sind, die verrastend mit der darüberliegenden Zier- bzw. Abdeckleiste (5) zusammenwirken.

15. Befestigungsvorrichtung nach einem oder mehreren der vorhergehenden Ansprüche, **dadurch gekennzeichnet,** daß die Zier- bzw. Abdeckleiste (5) unter Zwischenschaltung eines Adapters (23) am Spreizelement (8) in Lage gehalten ist.

16. Befestigungsvorrichtung nach Anspruch 15, **dadurch gekennzeichnet,** daß der Adapter (23) in die Zier- bzw. Abdeckleiste (5) eingesetzt ist und daß der Adapter (23) und das Spreizelement (8) über eine Klipsverbindung (24) zusammenwirken.

17. Befestigungsvorrichtung nach Anspruch 16, **dadurch gekennzeichnet,** daß am Adapter (23) oder am Spreizelement (8) ein angeformter Pilz (25) vorgesehen ist, der in eine Aufnahme (26) des anderen Elements (Spreizelement und/oder Adapter (23)) hinterrastend eingreift, wobei die Aufnahme (26) eine wesentlich größere Längserstreckung aufweist als der Pilz (25).

18. Befestigungsvorrichtung nach Anspruch 15, **dadurch gekennzeichnet,** daß der Adapter (23) an der Oberseite des Spreizelements (8) aufliegt.

## Claims

1. An attachment device for a trim- or cover moulding (5) for gaps (3) in motor vehicle superstructures, comprising a wedgeable holding body (4) which may be inserted in the gap (3) and holds the trim- or cover moulding (5), characterised in that the multiple-part holding body (4) comprises lateral gripping parts (6, 7) which may be braced against side walls (14) of the gap (3) by means of an expanding element (8) provided between the gripping parts (6, 7) and displaceable in the longitudinal direction of the gap (3), and in that the trim- or cover moulding (5) may be fixed to the expanding element (8).

2. An attachment device according to claim 1, characterised in that the holding body (4) is made up of three parts, the expanding element (8) being arranged so as to slide between two symmetrical, lateral gripping parts (6, 7).

3. An attachment device according to claims 1 and 2, characterised in that the gripping parts (6, 7) are wedge-shaped and the similarly wedge-shaped expanding element (8) has exterior walls extending parallel to the interior walls of the gripping parts (6, 7).

4. An attachment device according to one or more of the preceding claims, characterised in that the gripping parts (6, 7) in the finished state are identical in shape.

5. An attachment device according to one or more of the preceding claims, characterised in that the gripping parts (6, 7) each have a stop (11) on their wider end face which extends transversely to the longitudinal extent of the gap (3) and is in operative connection with a step-shaped indentation (12) of the opposite gripping part (6, 7).

6. An attachment device according to one or more of the preceding claims, characterised in that the lateral gripping parts (6, 7) cooperate with the central expanding element (8) by way of longitudinally oriented sliding guides (9, 10).

7. An attachment device according to claim 6, characterised in that the lateral gripping parts (6, 7) cooperate with the central expanding element (8) by way of dovetail guides (10).

8. An attachment device according to claims 6 and 7, characterised in that, in the region of the sliding guides (9, 10), teeth are provided between the expanding element (8) and the adjoining gripping part (6, 7).

9. An attachment device according to claims 6 and 7, characterised in that, in the region of the sliding guides (9, 10), the cooperating exterior surfaces of the gripping part (6, 7) and the expanding element (8) are roughened or eroded.

10. An attachment device according to claim 1, characterised in that a longitudinal groove (13) is formed on the expanding element (8) into which a shaped foot portion of the trim- or cover moulding (5) may be inserted.

11. An attachment device according to claim 10, characterised in that an additional mounting element is insertable into the longitudinal groove (13), which holds the trim- or cover moulding (5).

12. An attachment device according to claim 1, characterised in that a base (17) [sic, recte 15] is formed on the expanding element (8) which rests on the roof channel bottom (17) and forms rainwater drainage channels (16) underneath the holding body (4).

13. An attachment device according to one or more of the preceding claims, characterised in that the two gripping parts (6, 7), the expanding element (8) and optionally an additional mounting element for the trim- or cover moulding (5) are fitted together to form a preassembled unit before being inserted into the gap (3).

14. An attachment device according to one or more of the preceding claims, characterised in that moulded to the expanding element (8) are resilient snap-action hooks (21) which project upwards locally and cooperate in a detent action with the trim- or cover moulding (5) located thereabove.

15. An attachment device according to one or more of the preceding claims, characterised in that the trim- or cover moulding (5) is held in place on the expanding element (8) with the interposition of an adapter (23).

16. An attachment device according to claim 15, characterised in that the adapter (23) is inserted into the trim- or cover moulding (5) and in that the adapter (23) and the expanding element (8) cooperate by way of a clip connection (24).

17. An attachment device according to claim 16, characterised in that a moulded-on mushroom-shaped projection (25) is provided on the adapter (23) or on the expanding element (8) which engages into a mounting (26) of the other element (the expanding element and/or the adapter (23)), engaging therebehind in a detent action, the mounting (26) having a substantially larger longitudinal extent than the mushroom-shaped projection (25).

18. An attachment device according to claim 15, characterised in that the adapter (23) rests on the upper side of the expanding element (8).

## Revendications

1. Dispositif de fixation d'une moulure d'enjoliveur ou de couverture (5) de fentes (3) sur des carrosseries de véhicules, comportant un corps de maintien (4) pouvant être coincé, à insérer dans la fente (3), maintenant la moulure d'enjoliveur ou de couverture (5), caractérisé en ce que le corps de maintien (4), en plusieurs parties, comprend des parties de serrage (6, 7) latérales, qui peuvent être serrées contre les parois latérales (14) de la fente (3), au moyen d'un élément d'écartement (8) prévu entre les parties de serrage (6, 7), pouvant coulisser dans la direction longitudinale de la fente (3), et en ce que la moulure d'enjoliveur ou de couverture (5) peut être fixée sur l'élément d'écartement (8).

2. Dispositif de fixation selon la revendication 1, caractérisé en ce que le corps de maintien (4) est en trois parties, l'élément d'écartement (8) étant placé de manière à pouvoir être introduit entre deux parties de serrage (6, 7) latérales, symétriques.

3. Dispositif de fixation selon les revendications 1 et 2, caractérisé en ce que les éléments de serrage (6, 7) sont en forme de coins et l'élément d'écartement (8), également en forme de coin, présentent des parois extérieures parallèles aux parois intérieures des parties de serrages (6, 7).

4. Dispositif de fixation selon une ou plusieurs des revendications précédentes, caractérisé en ce que les parties de serrage (6, 7) présentent une forme identique en position de fabrication.

5. Dispositif de fixation selon une ou plusieurs des revendications précédentes, caractérisé en ce que les parties de serrage (6, 7) présentent, sur leur côté frontal plus large, une butée 11 s'étendant transversalement à l'extension longitudinale de la fente (3), qui est en liaison active avec un empreinte (12) en forme de gradin de la partie de serrage (6, 7) opposée.

6. Dispositif de fixation selon une ou plusieurs des revendications précédentes, caractérisé en ce que les parties de serrage (6, 7) latérales coopèrent avec l'élément d'écartement (8) central, par des guidages coulissants (9, 10) orientés longitudinalement.

7. Dispositif de fixation selon la revendication 6, caractérisé en ce que les parties de serrage (6, 7) latérales coopèrent par des guidages à queue d'aronde (10) avec l'élément d'écartement (8) central.

8. Dispositif de fixation selon les revendications 6 et 7, caractérisé en ce que dans la zone des guidages coulissants (9, 10), une denture est prévue entre l'élément d'écartement (8) et la partie de serrage (6, 7) adjacente.

9. Dispositif de fixation selon les revendications 6 et 7, caractérisé en ce que dans la zone des guidages coulissants (9, 10), les surfaces extérieures coopérantes de la partie de serrage (6, 7) et de l'élément d'écartement (8) sont rendues rugueuses ou érodées.

10. Dispositif de fixation selon la revendication 1, caractérisé en ce que sur l'élément d'écartement (8) est formée une rainure longitudinale (13), dans laquelle peut être insérée une partie de pied profilée de la moulure d'enjoliveur ou de couverture (5).

11. Dispositif de fixation selon la revendication 10, caractérisé en ce que dans la rainure longitudinale (13) peut être inséré un élément de réception supplémentaire, qui maintient la moulure d'enjoliveur ou de couverture (5).

12. Dispositif de fixation selon la revendication 1, caractérisé en ce que sur l'élément d'écartement (8) est formé un socle (17), qui repose sur le fond de canal de toit (17) et forme des canaux d'évacuation d'eau de pluie (16), sous le corps de maintien (4).

13. Dispositif de fixation selon une ou plusieurs des revendications précédentes, caractérisé en ce que les deux parties de serrage (6, 7), l'élément d'écartement (8) et éventuellement un élément de réception supplémentaire pour la moulure d'enjoliveur ou de couverture (5) sont assemblés avant le montage dans la fente (3), en une unité de construction prémontée.

14. Dispositif de fixation selon une ou plusieurs des revendications précédentes, caractérisé en ce que sur l'élément d'écartement (8) sont formés des crochets d'encliquetage (21), dépassant localement vers le haut, formant ressort, qui coopèrent par accrochage avec la moulure d'enjoliveur ou de couverture (5) placée dessus.

15. Dispositif de fixation selon une ou plusieurs des revendications précédentes, caractérisé en ce que la moulure d'enjoliveur ou de couverture (5) est immobilisée par insertion d'un adaptateur (23) sur l'élément d'écartement (8).

16. Dispositif de fixation selon la revendication 15, caractérisé en ce que l'adaptateur (23) est inséré dans la moulure d'enjoliveur ou de couverture (5) et en ce que l'adaptateur (23) et l'élément d'écartement (8) coopèrent au moyen d'un assemblage clipsé (24).

17. Dispositif de fixation selon la revendication 16, caractérisé en ce que sur l'adaptateur (23) ou sur l'élément d'écartement (8) est prévu un champignon (25) venu de moulage, qui s'engage, en s'accrochant par derrière, dans un logement (26) de l'autre élément (élément d'écartement et/ou adaptateur (23)), le logement (26) présentant une extension longitudinale sensiblement plus grande que le champignon (25).

18. Dispositif de fixation selon la revendication 15, caractérisé en ce que l'adaptateur (23) repose sur la face supérieure de l'élément d'écartement(8).
